# EUROPÄISCHE PATENTSCHRIFT

(11) **EP 0 785 870 B1**
(45) Veröffentlichungstag und Bekanntmachung des Hinweises auf die Patenterteilung: **23.06.1999**
(21) Anmeldenummer: 95933434.3
(22) Anmeldetag: 27.09.1995
(51) Int. Cl.: B32B 31/02, B32B 17/06, C03C 27/02, H01L 21/20

(54) **VERFAHREN ZUR VERÄNDERUNG DER DURCHBIEGUNG VON ANODISCH GEBONDETEN FLÄCHIGEN VERBUNDKÖRPERN AUS GLAS UND METALL ODER HALBLEITERMATERIALIEN**
PROCESS FOR CHANGING THE BEND OF ANODICALLY BONDED FLAT COMPOSITE BODIES MADE OF GLASS AND METAL OR SEMICONDUCTOR MATERIALS
PROCEDE DE MODIFICATION DE LA COURBURE DE CORPS COMPOSITES PLATS ANODIQUEMENT LIES EN VERRE ET METAL OU MATERIAUX SEMI-CONDUCTEURS

(30) Priorität: 13.10.1994 DE 4436561
(43) Veröffentlichungstag der Anmeldung: 30.07.1997
(73) Patentinhaber: Harz, Michael, 03048 Cottbus (DE); Engelke, Heinrich, 31073 Grünenplan (DE)
(72) Erfinder: Harz, Michael, 03048 Cottbus (DE); Engelke, Heinrich, 31073 Grünenplan (DE)
(74) Vertreter: Müller, Frithjof E., Dipl.-Ing.
(86) Internationale Anmeldenummer: EP9503825
(87) Internationale Veröffentlichungsnummer: WO9611806

(56) Entgegenhaltungen:
- CHEMICAL ABSTRACTS, vol. 123, no. 26, 25.Dezember 1995 Columbus, Ohio, US; abstract no. 355935, & PROC. ELECTROCHEM. SOC., - Juli 1995 Seiten 315-325, MICHAEL HARZ, WINFRIED BRUECKNER 'Thermally induced bend change of anodically bonded silicon and Pyrex wafers'
- GLASS TECHNOLOGY, Bd. 20, Nr. 1, Februar 1979 SHEFFIELD GB, Seiten 27-35, S.M. REKHSON 'Annealing of glass-to-metal and glass-to-ceramic seals. Part 1. Theory'
- EXTENDED ABSTRACTS, Nr. 1, 1993 PENNINGTON, NEW JERSEY US, Seiten 1210-1211, K. SOORIAKUMAR ET AL 'Thermal Mismatch Strain in Anodically Bonded Silicon and Glass'
- PATENT ABSTRACTS OF JAPAN vol. 15 no. 193 (C-0832) ,17.Mai 1991 & JP,A,03 050141 (MITSUBISHI ELECTRIC CORP) 4.März 1991,
- JOURNAL OF APPLIED PHYSICS, Bd. 40, Nr. 10, September 1969 NEW YORK US, Seiten 3946-3949, GEORGE WALLIS AND DANIEL I. POMERANTZ 'Field Assisted Glass-Metal Sealing'
- PATENT ABSTRACTS OF JAPAN vol. 13 no. 173 (E-748) ,24.April 1989 & JP,A,01 004013 (SONY CORP) 9.Januar 1989,
- DATABASE WPI Week 9444 Derwent Publications Ltd., London, GB; AN 94-352455 & JP,A,06 275 481 (NIPPON TELEGRAPH & TELEPHONE CORP) , 30.September 1994

## Beschreibung

Die Erfindung betrifft ein Verfahren zur Veränderung der Durchbiegung von anorganisch gebondeten flächigen Verbundkörpern aus Glas und Metall oder Halbleitermaterialien.

Mit anodischem Bonden bezeichnet man eine Verbindungstechnik zwischen Metallen oder Halbleitermaterialien und Glas, die sich durch eine Prozeßtemperatur unterhalb der Transformationstemperatur des Glases und durch Anwendung eines elektrischen Feldes auszeichnet.

Diese Technik ist z. B. in den beiden US-Patenten Nr. 3 397 278 und 3 417 459 beschrieben. Bei dem anodischen Bonden wird eine polierte Glasplatte in engen Kontakt mit einer Polierten Metall- oder Halbleiterplatte gebracht. Durch Anlegen einer Gleichspannung zwischen den Verbundpartnern in der Art, daß das Glas Kathoden- und der Halbleiter/Metall Anodenpotential erhält, kommt es bei erhöhter Temperatur zu einer Wanderung der Alkaliionen des Glases in Richtung auf die Kathode. Die dadurch an der Grenzfläche zum Verbundpartner entstehenden fest im Glasnetzwerk gebundenen, negativ geladenen Sauerstoffionen, bewirken eine starke elektrostatische Anziehung zwischen Glas und Halbleiter/Metall. Diese Anziehung bewirkt eine Annäherung der Verbundpartner bis in den atomaren Bereich. Zur chemischen, irreversiblen Verbindung zwischen Glas und Metall oder Halbleitermaterial kommt es durch Ausbildung von Sauerstoffbrücken zwischen den Bondpartnern.

In EP 0 139 334 A2 ist ein dreischichtiger Verbund beschrieben, bestehend aus einer GaAs-Schicht, einem Stützglas (verre de soutien) und einem Pufferglas (verre de tampon), das zwischen der Halbleiterschicht und dem Stützglas angeordnet ist. Dieses Pufferglas hat eine Erweichungstemperatur unterhalb der Erweichungstempeatur des Stützglases und erweicht bzw. entspannt bei der Desorptionstemperatur. Während der Desorption wird der gesamte Verbund entspannt, da Stützglas und Halbleiterschicht auf der weichen Pufferglasschicht "schwimmen" und sich frei ausdehnen bzw. kontraktieren können. Bei der späteren Abkühlung treten natürlich wieder Spannungen entsprechend den Differenzen in den Ausdehnungskoeffizienten auf, die gemäß der in dieser Druckschrift gegebenen Lehre durch ein drittes Glas kompensiert werden sollen.

Typische Bondspannungen liegen im Bereich von 50 V ... 1000 V. Die mögliche Bondtemperatur ist nach unten durch die Alkalibeweglichkeit (bei Borosilicatglas ca. 250°) und nach oben durch den Transformationspunkt des Glases (für Borosilikatglas ca. 520°) begrenzt. Ein anodisches Bonden oberhalb des Transformationspunktes ist möglich, kann aber zu einer plastischen Verformung des Glases führen. Das Glas sollte eine Mindestmenge Alkaliionen enthalten. Bei den typischerweise verwendeten Gläsern liegt deren Anteil im Bereich von (1 ... 5) Atom-% (Schott 8330 ≈ 3%, Hoya SD2 ≈ 2%). Sehr häufig zum anodischen Bonden verwendete Gläser sind z. Z. Schott 8330 und Corning 7740.

Zweck des Bondens ist es im allgemeinen, eine Unterlage und/oder Abdeckung aus Glas für dünne Metall- oder Halbleiterschichten zu erhalten bzw. ein Bauteil zusammenzufügen. Bekannte Anwendungen des Bondens sind die Stabilisierung und Kapselung von Sensoren aus mikrostrukturiertem Silizium, insbesondere von Druck- und Beschleunigungssensoren, die Abdeckung von fluidischen Strukturen (Kanäle, Ventile u.ä.) aus mikrostrukturiertem Silizium oder die Erzeugung von mikromechanischen Aktoren, z. B. auf Grundlage piezoelektrisch ausgelenkter Glasmembranen über in Silizium strukturierten Pumpenkammern.

Nach dem Bonden werden die erhaltenen Verbundkörper auf Raumtemperatur abgekühlt, was je nach der Dicke der Verbundkörper einige Minuten dauert.

Beim Abkühlen nach dem anodischen Bonden kommt es unter anderem durch nicht optimal angepaßte Ausdehnungskoeffizienten von Metall- bzw. Halbleiterwerkstoff und beteiligtem Glas und durch inhomogene Temperaturen im Bondaufbau zu unerwünschten Spannungen zwischen den miteinander verbondeten Materialien, die zu unerwünschten Verbiegungen der Bauteile führen. Durch homogenere Temperaturverteilung beim Bonden oder durch Benutzung eines Glases mit besser angepaßtem Ausdehnungskoeffizienten, ist es zwar mitunter möglich, diese Spannungen zu vermindern, das ist allerdings häufig mit dem Nachteil verbunden, daß der variierte Glastyp veränderte und damit möglicherweise nicht mehr optimale Bondeigenschaften besitzt.

Aus dem Dokument GLAS TECHNOLOGY, Band 20, Nr. 1, Februar 1979, SHEFFIELD GB, Seiten 27 bis 35, S.M. REKHSON "Annealing of glass-to-metal and glas-to-ceramic seals. Part 1. Theory" ist es bekannt, daß Glas in einem anodisch gebondeten flächigen Verbundkörper durch eine nachfolgende Warmebehandlung kontrahieren kann, wobei die Lange des Glases unter anfänglichem Aufbau von Spannungen verringert wird, die bei einer längeren Wärmebehandlung wieder abgebaut werden. Bei hohen Temperaturen erfolgt der Spannungsabbau schneller als bei niedrigen Temperaturen, wobei es sich als zweckmäßig herausgestellt hat, die Temperatur über einen längeren Zeitraum zu halten, um ein gewünschtes Spannungsmaß zu erhalten.

Nach dem Stand der Technik ist kein Verfahren bekannt, welches es gestattet, die nach dem Abkühlen von Bondproben vorhandenen mechanischen Spannungen aus dem Bauteil zu entfernen und dadurch die daraus resultierenden Verbiegungen zu eliminieren.

Die Aufgabe der Erfindung besteht darin, ein Verfahren zur Veränderung der Durchbiegung von anodisch gebondeten flächigen Verbundkörpern zu finden, mit dem sich die Durchbiegung dieser Verbundkörper nachträglich verändern läßt bzw. mit dem sich eine bei der Herstellung dieser Körper aufgetretene Durchbiegung rückgängig machen läßt und das sich zur Erzeugung planarer oder definiert gebogener anodisch gebondeter flächiger Verbundkörper benutzen läßt.

Diese Aufgabe wird durch das im Patentanspruch 1 definierte Verfahren gelöst. Vorteilhafte Ausgestaltungen dieses Verfahrens sind in abhängigen Patentansprüchen angegeben.

Wesentlich für einen Lösungsansatz ist die der Erfindung zugrunde liegende Erkenntnis, daß eine Planisierung nur erfolgen kann, wenn der gebondete Verbundkörper auf die Glasseite gesehen, konvex ist, was im allgemeinen dann der Fall ist, wenn der Ausdehnungskoeffizient des Glases kleiner als der des anderen Verbundpartners ist. Während jedoch die Ausdehnungskurve von Gläsern von unter Raumtemperatur bis praktisch Tg nahezu linear verläuft, ist die Ausdehnungskurve von Si, dem am häufigsten verwandten Verbundpartner, keineswegs linear. Daraus ergibt sich, daß nicht nur der Ausdehnungskoeffizient des Glases, sondern auch die Bonding-Temperatur einen sehr großen Einfluß auf die Richtung der Durchbiegung besitzt, je nachdem, an welchem Punkt der Ausdehnungskurve die Bonding-Temperatur liegt.

Im allgemeinen benutzt man zum Bonden mit Si Gläser, deren Ausdehnungskoeffizient bei Raumtemperatur dem des Si möglichst ähnlich ist. Solche Verbundkörper sind jedoch nach dem Bonden im allgemeinen mehr oder weniger konvex.

Das Verfahren gemäß der Erfindung beruht darauf, daß der anodisch gebondete flächige Verbundkörper aus Glas und Halbleitermaterial oder Metall einer zusätzlichen Temperaturbehandlung bei Temperaturen zwischen 250°C und Tg-10 K unterworfen wird. Bevorzugt wird der Verbundkörper 0,05 bis 20 Stunden auf Temperaturen zwischen 300° C und Tg-20 K, insbesondere 0,2 - 6 Stunden auf Temperaturen zwischen 350 und Tg-40 K erwärmt. Unter Tg wird die Transformationstemperatur des als Verbundpartner eingesetzten Glases verstanden.

Die Stärke der miteinander zu verbondenden Glas- und Halbleiter- bzw. Metallscheiben liegt im allgemeinen zwischen 0,1 bis 4 mm für die als Unterlage bzw. als Abdeckung benutzte Glasscheibe und 0,2 bis 1,0 mm für Halbleiter bzw. Metall, wobei als Halbleitermaterial am häufigsten Silizium eingesetzt wird.

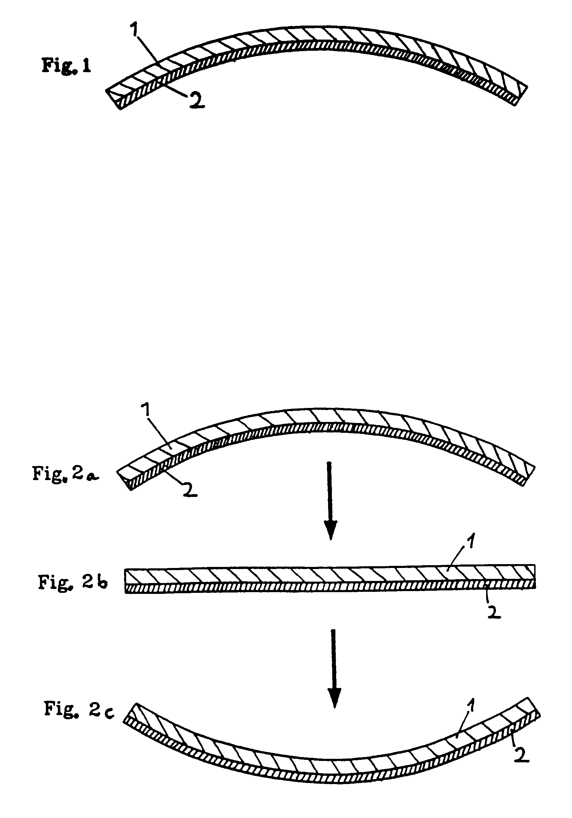

Nach dem Bonden, beispielsweise von 0,4 mm dicken Siliziumwafern mit 0,73 mm dicken Borosilicatglasscheiben (SCHOTT 8330, Tempax) beträgt die Durchbiegung bzw. die Abweichung von der Planität etwa 100 µm pro 7,62 cm (3"). Der Verbundkörper ist nach dem Bonden in Richtung auf die Glasseite hin verbogen, wie in Figur 1 dargestellt. Figur 1 zeigt in schematischer und nicht maßstabsgetreuer Darstellung einen Schnitt senkrecht zur Fläche des gebondeten Verbundkörpers. Der Verbundkörper besteht aus der Glasplatte 1 und der Halbleiter- bzw. Metallplatte 2. Durch die erfindungsgemäße Temperaturbehandlung wird eine Schrumpfung des Glases erreicht und es erfolgt eine Verbiegung zur entgegengesetzten Seite, da Metalle und Halbieitermaterialien diese Schrumpfung nicht zeigen. Die Veränderung der Verbiegung erfolgt daher immer von der Glasseite in Richtung auf die Metall- bzw. Halbleiterseite. Die Verbiegung infolge der erfindungsgemäßen Temperaturbehandlung ist in den Figuren 2a bis 2c dargestellt. Figur 2a zeigt analog zu 1 Figur 1 einen Verbundkörper unmittelbar nach dem Bonden. Durch die Temperaturbehandlung erfolgt eine Verbiegung des Verbundkörpers in Pfeilrichtung. Die erreichbare Schrumpfung ist abhängig von der thermischen Vorbehandlung der Glasproben und beträgt z. B. für technische Borosilicatgläser, die in großen Mengen zum Sonden eingesetzt werden und z. B. unter den Markennamen Duran, Pyrex oder Tempax im Handel erhältlich sind, maximal bis zu 500 ppm. Je nach der Dauer der Temperaturbehandlung kann man diese Verbiegung so weit fortsetzen, bis die beim Sonden aufgetretene Verbiegung gerade kompensiert ist, wie in Figur 2b dargestellt, oder, falls gewünscht, kann man die beim Bonden aufgetretene Verbiegung auch überkompensieren, so daß eine Durchbiegung zur entgegengesetzten Seite d. h. in Richtung auf die Siliziumschicht erzeugt werden kann (siehe Figur 2c). Je höher die Temperatur gewählt wird, desto kürzer sind die erforderlichen Behandlungszeiten. Eine Temperatur von Tg - 10 K sollte jedoch nicht überschritten werden, da dann der Bereich beginnt, in dem das Glas sein mechanisches Verhalten grundlegend vom elastischem zu viskos fließendem Verhalten ändert.

Die Temperatur, unterhalb derer eine Veränderung der Durchbiegung nur noch in unverhältnismäßig großen und daher unwirtschaftlichen Zeiträumen stattfindet, ist von Glastyp zu Glastyp unterschiedlich, kann aber von einem Durchschnittsfachmann leicht bestimmt werden. So sollte z. B. eine Temperatur von 300 °C für Borosilikatglas nicht unterschritten werden, da ansonsten die Temperzeiten für den gewünschten Effekt unnötig verlängert werden.

Bevorzugt wird ein Temperaturbereich von 350 °C bis etwa Tg - 40 K, weil dieser Bereich je nach Anforderung des Benutzers von feiner Abstufung bis zu optimal erreichbarer Beeinflußbarkeit geht.

Die Behandlungszeit sollte zwischen 0,05 und 20 Stunden liegen. Überschreitet man die obere Grenze, so werden durch die lange Verweilzeit hohe Kosten verursacht. Unterschreitet man 0,05 Stunden, so wird eine gleichmäßige Erwärmung der Charge und damit eine gleichmäßige Verbiegung immer problematischer. Am günstigsten arbeitet man im allgemeinen bei Verweilzeiten von 0,2 bis 6 Stunden, insbesondere 1 - 4 Stunden, weil hier gut eine gleichmäßige Erwärmung der Charge sichergestellt werden kann und die Kosten noch nicht zu hoch sind.

Bei Behandlungszeiten von 0,05 Stunden läßt sich z. Z. nur eine Reduzierung der Krümmung erreichen; zur Erzeugung ebener Proben sind in Abhängigkeit von den Bondbedingungen im allgemeinen Zeiten von wenigstens 10 Minuten erforderlich.

Werden bei einer ersten Behandlung Körper mit einer nicht ausreichenden Veränderung der Durchbiegung erhalten, so sind eine zweite oder weitere Behandlungen ggf. mit anderen Temperaturen und/oder anderen Zeiten problemlos möglich, um die Körper weiter zu korrigieren.

Ebenso ist über eine on-line-Kontrolle der Verbiegung der Stücke während der Wärmebehandlung unter Berücksichtigung der weiteren Verbiegung bei der Abkühlung auf Raumtemperatur und entsprechendes Beenden des Tempervorganges ein besonders genaues Dosieren der Verbiegung möglich. Die Ermittlung der bei der Abkühlung auf Raumtemperatur erfolgenden weiteren Verbiegung kann vom Fachmann anhand einiger Routineexperimente ermittelt oder bei bekannten thermischen Ausdehnungskoeffizienten, E-Moduli und Querkontraktionszahlen der Bondpartner berechnet werden.

Der Prozeß ist auch reversibel. Wurde die Durchbiegung zu stark verändert, so kann man den Körper bis in den Tg-Bereich erwärmen, wodurch die erzielte Veränderung der Durchbiegung rückgängig gemacht werden kann. Die im Endeffekt erhaltene Krümmung hat dann zumindest dasselbe Vorzeichen, wie nach dem anodischen Bonden; ihre Größe ist weitgehendst abhängig von den Abkühlbedingungen unterhalb Tg. Für eine technologische Nutzung ist der Umkehrprozeß aber nur selten interessant, da fertig prozessierte Wafer (speziell solche mit Al-Leitbahnen) nur auf max. 450 °C erwärmt werden können (siehe Beispiel 4). Das erfindungsgemäße Verfahren kann dann an dem Körper erneut zur Anwendung gelangen, um die gewünschte Durchbiegung zu erhalten.

Das Verfahren kann nicht nur ausgehend von einem abgekühlten Verbundkörper durchgeführt werden, sondern es ist auch möglich, das Verfahren unmittelbar und ohne Zwischenkühlung an den Bondvorgang anzuschließen.

Das bietet sich insbesondere dann an, wenn die Zeiten für die Temperaturbehandlung kurz gehalten werden können. In einem solchen Fall kann die Temperaturbehandlung noch in der Bondkammer oder in einer unmittelbar anschließenden Temperaturbehandlungseinrichtung, z. B. einem kurzen Durchlaufofen vorgenommen werden. Kurze Zeiten für die Temperaturbehandlung sind im allgemeinen dann möglich, wenn auch das Bonden in einer kurzen Zeit vorgenommen wurde. Eine mögliche wissenschaftliche Erklärung für diese Abhängigkeit der Länge der Temperaturbehandlung von der Bondzeit ist folgende: Die Schrumpfung (Compaction) des Glases, die Grundlage für das vorliegende Verfahren ist, ist kein zeitlinearer Vorgang. Frisches Glas schrumpft (bei konstanter Temperatur) zunächst schnell, d.h. mit relativ hoher Geschwindigkeit, mit Fortschreiten der Schrumpfung aber immer langsamer. Um eine bestimmte Schrumpfung zu erreichen, braucht man also immer länger, je stärker das Glas bereits zuvor geschrumpft wurde. Für das Bonden muß das Glas auf Temperaturen erwärmt werden, in denen auch bereits eine Schrumpfung (Compaction) stattfindet. Je länger nun diese mit dem Bonden verbundene Erwärmung dauert, desto länger dauert auch die Schrumpfung. Das führt aber dazu, daß ein mehr oder weniger großer Teil des Bereiches, in dem das Glas schnell schrumpft, bereits beim Bonden verbraucht wird, so daß die erfindungsgemäße Temperaturbehandlung länger dauert. Je kürzer die Bondzeit ist, desto unverbrauchter (für das Schrumpfen) ist das Glas. Je unverbrauchter im Sinne des Schrumpfens das Glas ist, desto schneller läuft die Schrumpfung ab und desto kürzere Zeiten für die Temperaturbehandlung sind möglich. Sollten in Zukunft Bondzeiten zur Anwendung gelangen, die erheblich unter den derzeit technisch möglichen Zeiten von ca. 15 Minuten liegen, lassen sich auch noch kürzere Zeiten für die Temperaturbehandlung bis zur Erzeugung planarer Verbundkörper als 10 Minuten erreichen.

Mit dem erfindungsgemäßen Verfahren lassen sich anodisch gebondete flächge Verbundkörper gezielt verbiegen. Dadurch ist es erstmals möglich, z. B. Verbundkörper aus Silizium und Borosilicatglas (Tempax^{R}, Duran^{R}, Pyrex^{R}), die aufgrund unterschiedlicher thermischer Ausdehnungskoeffizienten für Silizium und Glas nach dem anodischen Bonden verbogen sind, bis zur absoluten Planlage wieder zurückbiegen (siehe Anspruch 7), und falls gewünscht, sogar in die entgegengesetzte Richtung zu verbiegen.

Das Verfahren wird anhand der nachfolgenden Beispiele weiter erläutert:

### Beispiel 1:

Ein Verbund mit einem Durchmesser von 76,2 mm (3") aus einem Siliziumwafer mit einer Stärke von 0,4 mm und einer Glasscheibe aus Borosilikatglas Nr. 8330 der Fa. Schott Glaswerke mit einer Stärke von 0,73 mm wurde auf eine Temperatur von 500 °C erwärmt und mit einer Bondspannung von 400 V anodisch gebondet. Der reine Bondvorgang dauerte 20 s. Anschließend wurde der Verbund in üblicher Weise mit einer Rate von 1 K/min. bis auf 400 °C abgekühlt und danach innerhalb von ca. 5 Minuten auf Raumtemperatur abgeschreckt. Nach diesem ersten Schritt betrug sein Krümmungsradius + 7,2 m (Durchbiegung + 100 µm). Das Vorzeichen ist hier und im folgenden so definiert, daß bei einem Plus die Glasseite konvex ist. Bei einer nachfolgenden Temperung bei 300 °C über 4 h ergab sich keine signifikante Krümmungsänderung. Der Radius wurde danach mit + 7,05 m (+ 102 µm) bestimmt. Diese geringe Zunahme der Durchbiegung liegt im Bereich der Meßgenauigkeit. Es ist erkennbar, daß für dieses Glas die Temperatur bei 300 °C eine Grenze darstellt, bei der bereits mit untragbar hohen Behandlungszeiten gerechnet werden muß.

### Beispiel 2:

Ein Verbund derselben Werkstoffe und derselben Geometrie wie in Beispiel 1 wurde auf eine Temperatur von 460 °C erwärmt und bei einer Spannung von 500 V innerhalb einer Zeit von 100 s anodisch gebondet. Nach Beendigung des Bondvorganges wurde der Verbund mit einer Geschwindigkeit von 1K/min. bis auf 400 °C abgekühlt und anschließend auf Raumtemperatur abgeschreckt. Der Krümmungsradius betrug nach diesem Bondschritt + 7,1 m (Durchbiegung + 101 µm).

Nach einer Temperung bei 400 °C über 4 h wuchs der Krümmungsradius auf + 9,1 m (Durchbiegung + 79 µm) an. Bei einer Prozeßtemperatur von 400 °C zeigt sich bereits ein deutliches Schrumpfen des Glases.

### Beispiel 3:

Eine Werkstoffpaarung analog zu den Beispielen 1 und 2 wurde auf eine Temperatur von 420 °C erwärmt und mit 600 V gebondet. Der Bondvorgang dauerte 160 s. Anschließend erfolgte die Kühlung, wie in den Beispielen 1 und 2 mit einer Rate von 1 K/min. bis 400 °C und anschließendem Abschrecken auf Raumtemperatur. Der Verbund hatte nach diesem Prozeß einen Krümmungsradius von + 7,5 m (Durchbiegung + 95 µm). Ein anschließendes Tempern bei 450 °C über 4 h ergab einen Krümmungsradius von - 11,6 m (Durchbiegung - 62,1 µm), die Krümmung des Verbundes wurde nicht nur verringert, sondern es gelang eine negative Krümmung zu erzeugen. Der Verbund wurde "überkompensiert". Es gelingt also mit dieser Technologie nicht nur plane, sondern auch negativ verbogene Glas-Silizium-Verbindungen herzustellen.

### Beispiel 4:

Derselbe Verbund wie in Beispiel 3 wurde nach der Überkompensation auf 570 °C (= Tg + 50 K) erwärmt und dort eine Stunde gehalten. Nach dieser Zeit wurde er mit einer Geschwindigkeit von ca. 5 Minuten auf Raumtemperatur abgeschreckt. Sein Krümmungsradius betrug jetzt + 7,8 m (Durchbiegung + 93 µm). Die Erwärmung über Tg entspannte den Verbund und die Glasstruktur nahm ihre ursprünglichen Eigenschaften an. Das Abschrecken erzeugte unterhalb des Kühlbereiches wieder ein Glas, dessen Ausdehnungszustand dem im Ausgangszustand sehr ähnlich ist. Der erfindungsgemäße Entspannungsprozeß ist also beliebig wiederholbar.

### Beispiel 5:

Eine Silizium- und eine Glasscheibe entsprechend den Beispielen 1 bis 4 wurden bei 570 °C (= Tg + 50 K) mit einer Bondspannung von 100 V anodisch gebondet. Der Bondvorgang dauerte ca. 10 min. Anschließend wurde der Verbund mit einer Rate von 2 K/min. bis auf eine Temperatur von 490 °C abgekühlt. Nach dem folgenden schnellen Abkühlen auf Raumtemperatur betrug dessen Krümmungsradius + 52,1 m (Durchbiegung + 13,9 µm). Nach einer anschließenden Temperung bei 450 °C über 2 h entstand ein Krümmungsradius von - 51,6 m (Durchbiegung - 14 µm).

Die Größe und Reproduzierbarkeit einer möglichen Veränderung der Durchbiegung eines Glases hängt sehr stark von seiner thermischen Vergangenheit ab. Ist diese nicht oder nur ungenau bekannt, ist es, wie dargestellt, durch Sonden oberhalb Tg und anschließende definierte Kühlung möglich, ohne zusätzliche technologische Schritte gut definierte und reproduzierbare Ausgangsbedingungen für das Verfahren zur Veränderung der Durchbiegung zu erhalten.

## Patentansprüche

1. Verfahren zur Veränderung der Durchbiegung von anodisch gebondeten flächigen Verbundkörpern aus Glas und Metall oder Halbleitermaterialien, mit den Schritten:
- Bonden des Verbundkörpers in einer für die verwendeten Materialien kürzestmöglichen Zeit:
- sofortiges Abkühlen des gebondeten Verbundkörpers;
- Tempern des Verbundkörpers bei Temperaturen zwischen 250°C und 10°C unterhalb der Transformationstemperatur Tg des Glases, um durch Schrumpfen des Glases die Veränderung der Durchbiegung zu erreichen.

2. Verfahren nach Anspruch 1, **dadurch gekennzeichnet**, daß der Verbundkörper nach dem Bonden auf eine Temperatur abgekühlt wird, die in der Nähe der Temperatur der anschließenden Temperung liegt.

3. Verfahren nach Anspruch 1 oder Anspruch 2, **dadurch gekennzeichnet**, daß der Verbundkörper vor dem Tempern auf Raumtemperatur abgekühlt wird.

4. Verfahren nach einem der vorstehenden Ansprüche, **dadurch gekennzeichnet**, daß beim Tempern der Verbundkörper 0,05 bis 20 Stunden bei Temperaturen zwischen 300°C und Tg - 20 K behandelt wird.

5. Verfahren nach einem der vorstehenden Ansprüche, **dadurch gekennzeichnet**, daß beim Tempern der Verbundkörper 0,2 bis 6 Stunden bei Temperaturen zwischen 350°C und Tg - 40 K behandelt wird.

6. Verfahren nach einem der vorstehenden Ansprüche, **dadurch gekennzeichnet**, daß während der Temperaturbehandlung die Verbiegung gemessen und die Temperaturbehandlung abgebrochen wird, sobald eine vorgegebene Krümmung erreicht ist.

7. Verfahren zur Herstellung planarer anodisch gebondeter Verbundkörper aus Glas und Metallen oder Halbleitermaterialien, die nach dem Bonden glasseitig konvex verformt sind, **dadurch gekennzeichnet**, daß man den Verbundkörper sofort nach dem Bonden abkühlt und dann so lange auf Temperaturen zwischen 250°C und Tg - 10 K erwärmt, bis sich die Verbiegung aufgrund der Glasschrumpfung zurückgebildet hat.

## Claims

1. A process for changing the bend of anodically bonded flat composite bodies made of glass and metal or semi-conductor materials, having the following steps:
- bonding of the composite body in the shortest possible time appropriate to the materials used:
- immediate cooling of the bonded composite body:
- annealing of the composite body at temperatures between 250°C and 10°C below the transformation limit temperature (TLT) of the glass in order to obtain the change of bend by means of the compacting of the glass.

2. A process according to claim 1, characterised in that the composite body is cooled, after bonding, to a temperature approximate to the temperature of the subsequent annealing.

3. A process according to claim 1 or claim 2, characterised in that the composite body, prior to annealing, is cooled to room temperature.

4. A process according to one of the preceding claims, characterised in that, during the annealing, the composite body is treated at temperatures between 300°C and the transformation limit temperature (TLT) - 20 K for 0.05 to 20 hours.

5. A process according to one of the preceding claims, characterised in that, during the annealing, the composite body is treated at temperatures between 350°C and the transformation limit temperature (TLT) - 40 K for 0.2 to 6 hours.

6. A process according to one of the preceding claims, characterised in that, during the temperature controlled treatment, the amount of bend is measured and the temperature treatment discontinued as soon as a pre-selected degree of curvature is reached.

7. A process for manufacturing planar, anodically bonded composite bodies made of glass and metals or semi-conductor materials which, after bonding, are convexly deformed on the glass side, characterised in that the composite body is cooled immediately following the bonding and is then heated at temperatures between 250°C and the transformation limit temperature (TLT) - 10 K until the bending has receded because of the compaction of the glass.

## Revendications

1. Procédé pour modifier la flexion de corps composites plats à liaison anodique en verre et métal ou matériaux semi-conducteurs, comprenant les étapes consistant à :
- lier le corps composite en un temps aussi court que possible pour les matériaux employés ;
- refroidir immédiatement le corps composite lié ;
- attremper le corps composite à des températures inférieures de 250 °C à 10 °C à la température de transformation Tg du verre pour modifier la flexion par retrait du verre.

2. Procédé selon la revendication 1, caractérisé en ce qu'après liaison le corps composite est refroidi à une température voisine de la température de l'attrempage ultérieur.

3. Procédé selon la revendication 1 ou la revendication 2, caractérisé en ce qu'avant l'attrempaqe le corps composite est refroidi à la température ambiante.

4. Procédé selon une des revendications précédentes, caractérisé en ce que, lors de l'attrempage, le corps composite est traité pendant 0,05 à 20 heures a des températures comprises entre 300 °C et Tg - 20 K.

5. Procédé selon une des revendications précédentes, caractérisé en ce que, lors de l'attrempage, le corps composite est traité pendant 0,2 à 6 heures à des températures comprises entre 350°C et Tg - 40 K.

6. Procédé selon une des revendications précédentes, caractérisé en ce qu'au cours du traitement thermique la déformation est mesurée et le traitement thermique est interrompu dès qu'une courbure prédéfinie est atteinte.

7. Procédé de fabrication de corps composites plans à liaison anodique en verre et métaux ou matériaux semi-conducteurs, qui, après liaison, présentent une déformation convexe côté verre, caractérisé en ce que l'on refroidit le corps composite immédiatement après la liaison et on le chauffe ensuite à des températures comprises entre 250 °C et Tg - 10 K jusqu'à ce que la déformation se soit recréée sous l'effet du retrait du verre.
